# FASCICULE DE BREVET EUROPEEN

(11) **EP 3 839 411 B1**
(45) Date de publication et mention de la délivrance du brevet: **23.08.2023**
(21) Numéro de dépôt: 19216845.8
(22) Date de dépôt: 17.12.2019
(51) Int. Cl.: F41G 3/22, G02B 27/00

(54) **SYSTÈME INTELLIGENT POUR LE CONTRÔLE DE FONCTIONS DANS UNE TOURELLE DE VÉHICULE DE COMBAT**
INTELLIGENTES SYSTEM FÜR DIE KONTROLLE DER FUNKTIONEN IN EINEM DREHKRANZ EINES KAMPFFAHRZEUGS
SMART SYSTEM FOR CONTROLLING FUNCTIONS IN A TURRET OF A COMBAT VEHICLE

(43) Date de publication de la demande: 23.06.2021
(73) Titulaire: John Cockerill Defense SA, 4431 Loncin (BE)
(72) Inventeur: Verheylewegen, Guillaume, 5310 Saint-Germain (BE); Clermont, Bernard, 4624 Romsée (BE)
(74) Mandataire: AWA Benelux

(56) Documents cités:
- US-A1- 2009 086 015
- US-A1- 2009 087 029
- US-A1- 2009 184 889
- US-B1- 7 401 920

## Description

### Objet de l'invention

La présente invention a trait au domaine de l'armement, notamment à un système intelligent de contrôle de fonctions d'une tourelle dans un véhicule terrestre de combat, et au véhicule terrestre de combat équipé d'un tel système.

### Arrière-plan technologique et état de la technique

Il est connu qu'une tourelle de véhicule terrestre blindé comprend typiquement un système de visée ou viseur (Sight System) qui met une voie jour et une voie nuit (ou thermique) à disposition de l'artilleur et du commandant ainsi qu'un télémètre laser. Généralement l'artilleur et le commandant ont chacun à disposition une station individuelle munie d'une poignée de commande (joystick), qui permet de donner une commande de direction en azimut et en élévation au viseur et donc de modifier la ligne de visée, ainsi que d'un écran de contrôle. Le viseur du commandant est très similaire à celui de l'artilleur si ce n'est qu'il fournit en plus une vision panoramique.

Les commandes de la tourelle sont donc transmises manuellement grâce à un joystick, un guidon ou plus généralement une manette présentant une pluralité de boutons et associés à un support visuel sur un écran d'affichage montrant l'environnement extérieur ainsi que les commandes de visée.

Cependant, ce système connu ne permet pas toujours un accès précis aux différents boutons de commande, en particulier lors du roulage du véhicule qui génère des vibrations ayant pour conséquence que les boutons et écrans bougent constamment par rapport aux yeux et mains des opérateurs. Ainsi la vision des écrans est saccadée et approximative et les mains doivent rester collées sur la manette de contrôle. Ce problème affecte non seulement la sélection de cibles mais également la transmission manuelle de la commande de tir.

Afin de répondre à ce problème, le document WO 2016/072927 A1 propose un système de perception de situation dans un véhicule terrestre de combat, comprenant une pluralité de capteurs de saisie d'image configurés pour enregistrer des séquences d'images montrant différentes vues partielles de l'environnement du véhicule terrestre de combat et une pluralité de dispositifs clients, tels que des casques intégrés de réalité virtuelle/augmentée comprenant notamment des moyens d'affichage et un capteur de direction, où chacun de ceux-ci est configuré pour afficher une vue de l'environnement du véhicule de combat, selon le souhait de l'utilisateur, sur un afficheur. Les capteurs de saisie d'image sont configurés pour être connectés en réseau et pour envoyer les séquences d'image sur le réseau au moyen d'une technique selon laquelle chaque séquence d'image envoyée par un capteur peut être reçue par une pluralité de récepteurs, comme la multidiffusion. Les dispositifs clients sont également configurés pour être connectés audit réseau et pour recevoir, via celui-ci, au moins une séquence d'images enregistrée par au moins un capteur de saisie d'images. En outre, chaque dispositif client est configuré pour générer, de lui-même, la vue souhaitée en traitant des images à partir de la séquence d'images et à permettre l'affichage de la vue souhaitée.

Notamment, les vues de l'environnement présentées à l'affichage peuvent être sélectionnées par un opérateur sur base de la mesure de la position de la tête de l'utilisateur au moyen du capteur de direction ou encore sur base de moyens de suivi oculaire (eye tracking) intégrés dans les casques, grâce auxquels celui-ci indique la vue souhaitée en regardant dans une direction déterminée. Ainsi, en contrôlant la position de la tête ou des yeux de l'opérateur, on peut sélectionner différentes images à visualiser dans la casque, des images avant mais aussi des images arrière, hémisphériques ou à 360° en fonction du nombre et de la répartition des capteurs à l'extérieur du véhicule.

Le document précité enseigne comment résoudre en partie le problème mentionné ci-dessus en facilitant une sélection mains-libres des vues souhaitées grâce au suivi oculaire mais reste silencieux notamment quant à la sélection des moyens de commande de tir dans un véhicule terrestre de combat affecté par des vibrations de roulage.

On connaît par ailleurs une utilisation de la technique de suivi oculaire à destination de personnes souffrant de troubles physiques ou cognitifs pour leur permettre le contrôle d'un ordinateur, sans utilisation d'un clavier ou d'une souris. Trois modes de « cliquer » au moyen de la commande oculaire existent : le clignement d'oeil qui présente le désavantage de perdre momentanément la cible de vue ; la temporisation ou fixation du regard dans une zone spécifique pendant une durée prédéterminée ; et l'utilisation d'un contacteur qui intervient après validation de la « cible » par le regard.

Cette technique a été mise au point pour contrôler un ordinateur. Il est autrement plus sensible, vu le risque d'erreur, d'engager une cible au moyen d'un canon ou d'un lance-missiles et cette technique ne peut donc être adaptée en l'état à cet objectif.

La société ukrainienne LimpidArmor a mis au point une interface hardware et software basée sur le système MS HoloLens qui est un casque doté de lentilles transparentes et de capteurs intégrés pour une expérience de réalité mixte (virtuelle et augmentée), qui permet de projeter des images 3D sous la forme d'hologrammes de haute résolution et qui permet à l'utilisateur d'interagir physiquement par gestes avec les éléments 3D (couche virtuelle superposée à la couche réelle). Huit modules de caméra à stabilisation sont situés à l'extérieur du véhicule pour offrir une vue à 360° de l'environnement à l'équipage du char en streaming et en temps réel. Le système affiche également la télémétrie de tous les sous-systèmes de combat, les statuts de tâches, les cibles, ainsi que d'autres données de réalité augmentée, basées notamment sur des algorithmes d'intelligence artificielle. Le système ne décrit pas explicitement le couplage de ce système avec le contrôle des armes du véhicule et est donc silencieux sur le problème d'améliorer la fluidité de la vision et la précision de la commande de tir en situation de roulage. De plus, des paramètres associés au suivi du mouvement des bras et mains de l'opérateur peuvent servir de données d'entrée dans le système MS HoloLens. Compte tenu du niveau de vibrations rencontré dans un char, le suivi du mouvement des bras et mains semble inadapté car imprécis.

Le document US 7,401,920 B1 divulgue un système de suivi oculaire qui détermine la ligne de visée d'un utilisateur en fonction de la position relative entre le centre de la pupille et un point de référence, le système comprenant un détecteur d'image qui capture une image de l'œil, une source de lumière d'éclairage de pupille qui éclaire la pupille de l'utilisateur, une source de lumière de référence qui éclaire une partie différente du visage de l'utilisateur en tant que point de référence et un processeur d'imagerie qui analyse l'image de l'œil capturée pour déterminer la ligne de visée.

Le document US 2009/0087029 A1 divulgue une technologie du système 4D-GIS déployant un algorithme basé sur le GIS utilisé pour déterminer l'emplacement d'une cible en mouvement en enregistrant l'image de terrain obtenue à partir d'un capteur d'indication de cible mobile (MTI) ou d'une petite caméra de véhicule aérien sans pilote (UAV) avec la carte numérique du GIS. Pour la prédiction de mouvement, l'état de la cible est estimé à l'aide d'un filtre de Kalman étendu (EKF). Afin d'améliorer la prédiction de la trajectoire de la cible en mouvement, un algorithme de raisonnement à logique floue est utilisé pour estimer la destination d'une cible en mouvement en synthétisant des données à partir du GIS, des statistiques de la cible, des tactiques et d'autres informations dérivées de l'expérience passée, telles que la direction de déplacement probable de cibles en corrélation avec la nature du terrain et la mission supposée.

### But de l'invention

L'invention a pour objectif de pallier au moins un des inconvénients de l'état de la technique susmentionné.

L'invention vise à réduire le travail cognitif de l'opérateur et à améliorer l'interface machine-opérateur.

L'invention a aussi pour but de permettre une exécution d'opérations plus rapide et moins perturbée par les conditions extérieures.

Plus particulièrement, l'invention a pour objectif de permettre un visuel « lisible », confortable et fluide des commandes et de l'environnement extérieur et intérieur au véhicule blindé combiné avec une utilisation optimisée de l'oeil de l'opérateur fournissant une réaction instantanée au profit des séquences proprement dites d'engagement et de déclenchement de tir.

### Principaux éléments caractéristiques de l'invention

La présente invention concerne un système de contrôle de fonctions dans une tourelle de véhicule blindé en utilisant un casque intelligent permettant une vision déportée de l'environnement et des accès aux commandes de fonctionnement et de mise à feu.

Un premier aspect de l'invention a pour objet un système de contrôle de fonctions de tourelle de véhicule terrestre de combat, ledit système de contrôle comprenant :
- une pluralité de capteurs de saisie d'image configurés pour enregistrer des séquences d'images présentant une vue au moins partielle de l'environnement 360° du véhicule terrestre de combat ;
- au moins un casque de réalité virtuelle, augmentée ou mixte adapté pour être porté par un opérateur, ledit casque étant configuré pour présenter ladite vue au moins partielle de l'environnement du véhicule terrestre de combat sur un affichage, ledit casque comportant un capteur de direction adapté pour suivre l'orientation dudit casque imprimée lors d'un mouvement de tête de l'opérateur ainsi que des moyens de suivi oculaire adaptés pour suivre des mouvements oculaires dudit opérateur ;
- une unité de contrôle, comprenant au moins une unité de calcul et adaptée pour recevoir en entrée et traiter :
   ∘ des images fournies par les capteurs de saisie d'image ;
   ∘ des données de position et d'orientation de casque fournies par ledit capteur de direction ;
   ∘ des données de position oculaires fournies par les moyens de suivi oculaire ;

l'unité de contrôle étant adaptée pour calculer une vue augmentée au moins sur base desdites images et des données de position et d'orientation de casque,
ladite vue augmentée étant affichée pour l'opérateur par l'intermédiaire dudit casque ;
ladite unité de contrôle étant en outre adaptée pour déterminer des paramètres d'une cible sélectionnée par l'opérateur au moins sur base des données oculaires, ladite unité de contrôle étant configurée pour calculer au moins un paramètre de tir et ladite unité de contrôle étant adaptée pour transmette l'au moins un paramètre de tir à un contrôleur d'arme de tourelle ;
ledit système de contrôle comportant au moins un détecteur de demande de tir configuré pour fournir un signal de demande de tir par l'opérateur.

Le système de contrôle est caractérisé en ce que l'au moins un casque de réalité virtuelle comprend au moins un capteur additionnel de saisie d'images pour enregistrer des séquences d'images de l'environnement à l'intérieur du véhicule terrestre de combat, ledit système de contrôle étant adapté pour recevoir des données associées auxdites images et de les afficher dans la vue augmentée sur demande d'un opérateur.

Selon des modes avantageux de l'invention, le système de contrôle de fonctions de tourelle de véhicule terrestre de combat comprend une ou plusieurs des caractéristiques techniques suivantes, selon toute combinaison possible :
- ledit détecteur de demande de tir comprend au moins un joystick ou une manette libre configuré(e) en tant que capteur tactile ;
- ledit détecteur de demande de tir comprend au moins un module de reconnaissance vocale adapté pour fournir le signal de demande de tir ;
- des coordonnées d'un point du regard d'un opérateur dans la ou chaque vue augmentée sont déterminées sur base des moyens de suivi oculaire et le système est configuré de telle sorte qu'un objet virtuel associé audit point est intégré dans ladite vue et est positionné selon lesdites coordonnées ;
- le système comprend des moyens de détermination des paramètres d'au moins une cible potentielle sur base des images fournies par les capteurs de saisie d'images, le système de contrôle étant configuré pour faire coïncider dans la ou chaque vue augmentée un objet graphique associé à la ou chaque cible potentielle avec les coordonnées de la ou chaque cible potentielle ;
- la cible sélectionnée par un opérateur est identifiée ou validée lorsque l'objet graphique associé respectivement à une cible potentielle coïncide avec l'objet virtuel associé au point de regard de l'opérateur, les paramètres de la cible sélectionnée étant déterminés sur base des paramètres de la cible potentielle identifiée ;
- les paramètres de la cible sélectionnée sont déterminés sur base des coordonnées du point du regard de l'opérateur, par temporisation, c'est-à-dire lorsque le point regard dudit opérateur devient immobile pendant une durée prédéterminée ;
- la ou chaque vue augmentée est calculée sur base d'un traitement tel qu'une fusion d'images fournies par les capteurs de saisie d'images et/ou par le capteur additionnel de capture d'images, et d'au moins un paramètre de contrôle de la configuration de ladite vue augmentée, de préférence l'au moins un paramètre comportant des coordonnées du centre de ladite vue et/ou la largeur du champ de ladite vue ;
- la ou chaque vue augmentée est une vue sélectionnée au moins dans une liste de vues constituée d'une vue panoramique extérieure de l'environnement du véhicule terrestre de combat de jour ou infrarouge, d'une portion de ladite vue panoramique, d'une région correspondant à un zoom ou agrandissement de la portion de ladite vue panoramique, d'une vue partielle de l'environnement à l'intérieur du véhicule terrestre de combat et de toute combinaison de ces dernières ;
- la ou chaque vue augmentée est sélectionnée dans la liste de vues sur base d'au moins un paramètre de contrôle de la configuration de la vue augmentée, de préférence ladite vue comportant un objet virtuel de sélection dudit paramètre, de préférence un menu intégré dans la vue augmentée ;
- l'au moins paramètre de contrôle de la configuration de la vue augmentée est déterminé sur base des coordonnées d'un point du regard d'un opérateur dans la vue augmentée ;
- le paramètre de tir comprend au moins l'un des éléments suivant :
   ∘ une donnée correspondant à l'azimut et une donnée correspondant à l'élévation dudit canon de la tourelle ;
   ∘ des données correspondant aux coordonnées GPS de la cible sélectionnée ;
- les capteurs de saisie d'image comportent au moins une caméra visible 360° et/ou au moins une caméra optronique rotative et/ou pivotante, haute définition avec zoom ;
- la vue au moins partielle de l'environnement du véhicule terrestre de combat correspond à la vue dégagée qu'aurait un opérateur sans l'entrave d'au moins une portion de paroi de la caisse et/ou de la tourelle à partir d'une position liée à la caisse ou à la tourelle du véhicule terrestre de combat, ladite position étant de préférence à l'intérieur de la caisse.a

Un autre aspect de l'invention concerne un véhicule terrestre de combat comportant:
- un système selon l'invention, comme décrit ci-dessus ;
- une caisse automobile blindée et une tourelle motorisée pouvant l'un et l'autre supporter les capteurs de saisie d'image ;
- un canon et/ou un lance-missile disposé sur ladite tourelle ;
- un contrôleur d'arme de tourelle disposée sur le véhicule terrestre de combat configuré pour recevoir l'au moins un paramètre de tir à dudit système.

Les mesures de l'invention sont avantageuses en ce qu'elles permettent d'améliorer l'interface machine opérateur. Elles permettent aussi des opérations plus rapides. L'utilisation d'un casque de réalité virtuelle ou augmentée ou mixte peut être adaptée pour permettre en outre de mieux protéger les yeux, le système auditif et le visage de l'opérateur et diminue ainsi le risque de blessures graves, ce qui peut augmenter son implication. L'utilisation d'un casque de réalité virtuelle ou augmentée ou mixte permet aussi une meilleure gestion de la superposition des vues internes et externes.

De manière générale, les modes avantageux de chaque objet de l'invention sont également applicables aux autres objets de l'invention. Dans la mesure du possible, chaque objet de l'invention est combinable aux autres objets. Les objets de l'invention sont également combinables aux modes de réalisation de la description, qui en plus sont combinables entre eux.

### Description brève des figures

D'autres caractéristiques et avantages de la présente invention seront mieux compris à l'aide des dessins et de la description ci-après.

La figure 1 représente schématiquement le système selon l'invention en combinaison avec un contrôleur d'arme de tourelle.

La figure 2 illustre des exemples de moyens de saisie d'images selon l'invention.

La figure 3 montre un exemple schématique de vue augmentée selon l'invention.

### Description détaillée de l'invention

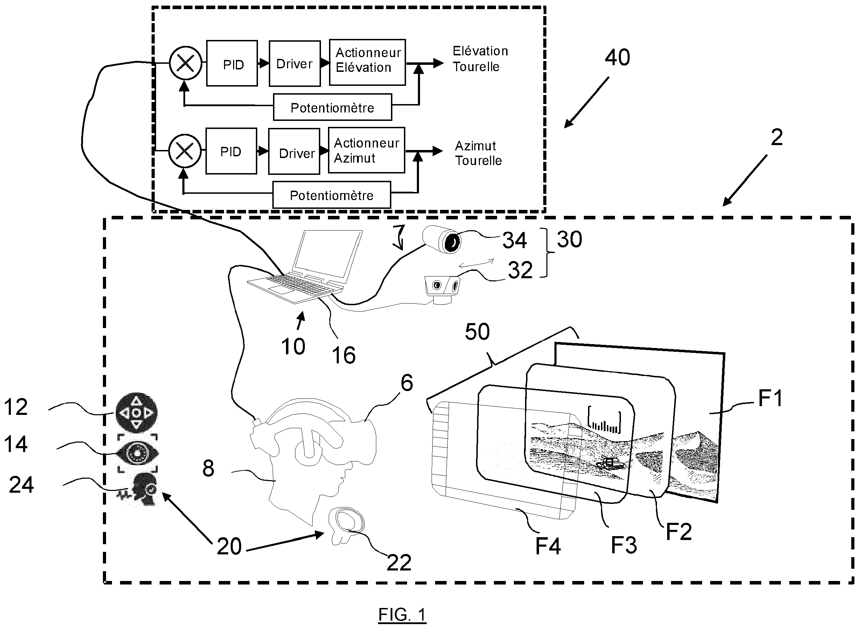

La figure 1 représente une vue schématique du système de contrôle 2 de fonctions de tourelle de véhicule terrestre de combat 4 selon l'invention. Le système de contrôle 2 comporte un casque de réalité virtuelle, augmentée ou mixte 6 adapté pour être porté par un opérateur 8 tel qu'un artilleur ou un commandant, et une unité de contrôle 10. Le casque 6 peut comprendre un écran d'affichage ou une lentille transparente (non représenté) ou un guide d'ondes (non représenté) distinct pour chaque oeil. L'écart pupillaire peut généralement se régler manuellement à l'aide d'une mollette, de même que la distance entre les yeux et les optiques.

Le casque de réalité virtuelle 6 est configuré pour présenter une vue au moins partielle de l'environnement externe du véhicule terrestre de combat 4, sur un affichage stéréo. Ainsi, le casque 6 comporte en outre une unité de capteur de mouvement ou de direction 12, muni d'un ou plusieurs capteurs de type gyroscope, accéléromètre ou capteur de position laser, adaptée pour suivre au moyen de capteurs comment l'opérateur 8 oriente le casque 6 par le mouvement de sa tête. Egalement, le casque de réalité virtuelle 6 comprend des moyens de suivi oculaire 14 adaptés pour suivre les mouvements oculaires de l'opérateur 8. Enfin, le casque 6 comprend également au moins un capteur additionnel de capture d'image, notamment une ou deux caméras intégrées sur la face avant du casque 6, permettant à l'opérateur 8 de visualiser ou contrôler l'environnement à l'intérieur du véhicule terrestre de combat sans enlever son casque 6.

L'unité de contrôle 10 comprend généralement des moyens informatiques matériels et logiciels (pour la mise en oeuvre d'algorithmes mathématiques, de traitement d'image ou d'apprentissage machine), en particulier une unité de calcul 16 telle qu'un contrôleur ou un ordinateur portable (laptop) comme représenté sur la figure 1, comprenant une unité centrale de calcul dédié et une mémoire de stockage telle qu'un disque dur, et/ou un server in-situ ou à distance. L'unité de contrôle 10 reçoit en entrée des données en provenance de différents capteurs tels que :
- le détecteur de demande de tir 20, notamment un capteur tactile monté sur une manette libre 22 et/ou un module de reconnaissance vocale 24 configuré pour enregistrer un ordre de tir par la parole ;
- la pluralité de capteurs d'images 30, par exemple une caméra visible 360° 32, une caméra optronique rotative et/ou pivotante haute-définition avec zoom 34, etc. ;
- les moyens/capteurs de suivi oculaire 14, comprenant une ou plusieurs diodes IR proche et caméras haute résolution et algorithmes ;
- l'unité de capteur de direction 12 du casque de réalité virtuelle 6, comprenant un accéléromètre, un gyroscope et/ou un capteur de position laser.

Ces données sont alors traitées par l'unité de contrôle 10 qui donne en sortie les paramètres d'une cible sélectionnée tels que des données de visée correspondant à l'azimut et l'élévation à communiquer au canon de la tourelle pour la cible sélectionnée. L'utilisation d'une manette libre 22 (c'est-à-dire sans attache mécanique) ou d'un module de reconnaissance vocale 24 présente l'avantage que l'opérateur ne soit pas obligé de garder une main en contact avec le poste de contrôle lorsque le véhicule terrestre de combat est soumis aux vibrations de roulage.

La manette libre (ou sans fil) 22 peut comprendre au moins un gyroscope, un accéléromètre et/ou un capteur de position laser.

On entend par capteur tactile tout moyen capable de fournir un signal (électrique) en réponse à une intervention de l'opérateur 8 sous forme d'une pression de la main ou du doigt, de préférence une interface homme/machine via une commande du ou des doigts de l'opérateur 8. Ce capteur peut être à titre d'exemple un bouton, un capteur capacitif ou un écran tactile.

Le système 2 selon l'invention présente l'avantage d'être modulaire. En effet, l'unité de contrôle 10 peut être adaptable à différent types de véhicule terrestre de combats. A cette fin, l'unité de contrôle 10 peut être paramétrée avec les données du véhicule. Cette approche favorise le rationalisation des coûts et facilite la maintenance.

Le contrôleur d'arme 40 de tourelle peut contrôler un canon et/ou un lance-missile monté sur la tourelle. Les actionneurs du contrôleur d'arme 40 ne se limitent pas à des commandes électriques comme illustré à titre d'exemple sur la figure 1 mais peuvent comprendre des actionneurs hydrauliques. De plus, un contrôleur d'arme de tourelle 40 commande typiquement non seulement les moyens d'orientation de tir de la tourelle mais aussi le chargement du canon (non représenté).

Les paramètres d'une cible sélectionnée peuvent être aussi les coordonnées GPS, soit en complément des coordonnées d'azimut et d'élévation, soit en tant qu'alternative.

Les capteurs de saisie d'image 30 comportent au moins une caméra visible 360° 32 et/ou au moins une caméra optronique rotative et/ou pivotante haute-définition avec zoom 34. De préférence, les capteurs de capture d'image 30 sont disposés sur la tourelle du véhicule terrestre de combat 4. Les modes de réalisation ne se limitent pas à une seule caméra 360° 32 et/ou une seule caméra rotative et/ou pivotante haute-définition avec zoom 34 mais peuvent bien sûr comprendre plusieurs caméras 360° 32 et/ou plusieurs caméras rotatives et/ou pivotantes haute-définition avec zoom 34, de manière à couvrir tout l'environnement 360° avec une résolution suffisante. La démultiplication des moyens de saisie d'images permet aussi un meilleur suivi des cibles par le ou les opérateurs 8. Dans une configuration particulière, une caméra rotative et/ou pivotante haute-définition avec zoom 34 peut être prévue pour chaque opérateur 8, permettant une sélection des cibles de façon indépendante.

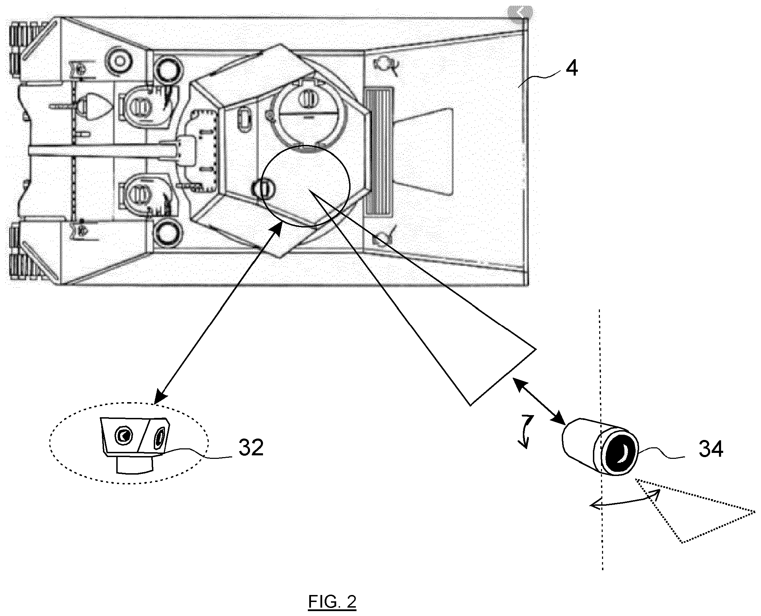

La figure 2 présente un mode de réalisation particulier de l'invention dans lequel le véhicule terrestre de combat 4 comprend une caméra 360° 32 et une caméra rotative et/ou pivotante haute-définition avec zoom 34. Selon une forme d'exécution, la rotation et le pivotement de la caméra haute-définition peuvent être avantageusement asservis au capteur de direction 12 du casque 6.

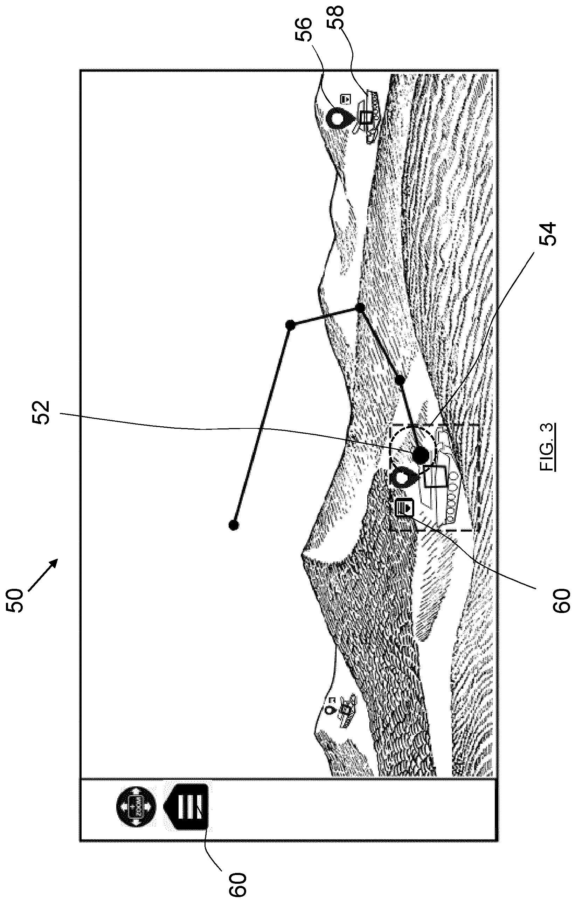

La figure 3 illustre un exemple de vue augmentée 50 de l'environnement extérieur du véhicule terrestre de combat 4 qu'un opérateur 8 perçoit dans le casque 6. L'opérateur 8 peut aussi choisir la vue 50 à projeter parmi plusieurs vues comme par exemple une vue panoramique extérieure de l'environnement du véhicule terrestre de combat de jour ou infrarouge (nuit), une portion de ladite vue panoramique, un zoom de la portion de ladite vue panoramique, une vue partielle de l'environnement à l'intérieur du véhicule terrestre de combat 4, ou toute combinaison de ces dernières.

De préférence, une vue augmentée 50 stéréoscopique ou non est affichée dans le casque 6. Cette vue augmentée 50 peut comprendre plusieurs couches comme par exemple la vue réelle ou optique (F1), une vue optronique en rayonnement non visible, par ex. IR avec traitement d'image (F2), une vue de data augmentées (F3) et une vue graphique des paramètres de contrôle de tourelle (F4). De manière générale, le casque 6 présente une vue calculée pour chaque oeil de l'opérateur 8. Cette vue 50 peut aussi comprendre un ou plusieurs objets virtuels 52 associés au point de regard 54 d'au moins un des opérateurs 8, ainsi qu'un ou plusieurs objets graphiques 56 associés à la ou à chaque cible potentielle 58. De plus, un ou plusieurs menus 60 peuvent être intégrés dans la ou dans chaque vue augmentée 50. Grâce aux menus 60, l'opérateur peut, à la demande, visualiser différents modes relatifs aux vues extérieures, commandes de tourelle, ciblages, commandes de tir. Ces modes sont « empilables » sur la vision.

Les cibles potentielles 58 peuvent être déterminées ou sélectionnées par traitement informatique sur base de l'analyse des images selon des algorithmes de reconnaissance d'objets. La détermination de ces cibles potentielles 58 peut être effectuée par l'unité de contrôle 10 selon l'invention à partir d'une base de données qui comprend les paramètres d'une série de cibles usuelles, par exemple des formes modélisées ou stylisées de véhicules de combat ennemis, en particulier par apprentissage automatique (machine learning). Cette base de données peut être téléchargée, permettant d'adapter les moyens d'intelligence artificielle au terrain. L'unité de contrôle 10 peut aussi interagir avec et obtenir des données provenant d'autres moyens de renseignement externes ou déportés, tels que des drones, des avions ou des satellites.

Si l'opérateur 8 repère un cible potentielle 58 qui n'a pas encore été identifiée par les moyens de reconnaissance d'objets, il a la possibilité de l'engager par exemple lorsque son point de regard se stabilise sur cette dernière et qu'une demande d'engagement prédéterminée est effectuée.

Dans une configuration avec deux opérateurs 8, une cible potentielle 58 peut être identifiée par l'un des opérateurs 8 et la demande de tir peut être effectuée par l'autre opérateur 8.

Le véhicule terrestre de combat 4 est par exemple un char ou un véhicule blindé de combat d'infanterie tout-terrain à roues.

Le casque 8 peut avantageusement comprendre des moyens de renfort sur la face avant et/ou les faces latérales comme une ou des plaques (en kevlar ou équivalent) pour protéger les yeux et/ou le système auditif de l'opérateur, selon les normes militaires en vigueur. Cet aspect de robustesse et sécurité n'est pas du tout abordé dans les casques de réalité virtuelle actuellement sur le marché qui sont principalement destinés aux applications de jeux, et constitue ainsi un autre aspect innovant de la présente invention.

### Liste des références :

- 2: système de contrôle de fonctions de tourelle
- 4: véhicule terrestre de combat
- 6: casque de réalité virtuelle
- 8: opérateur
- 10: unité de contrôle
- 12: capteur de direction
- 14: moyens de suivi oculaire
- 16: unité de calcul
- 20: détecteur de demande de tir
- 22: manette libre
- 24: module de reconnaissance vocale
- 30: capteur de saisie d'image
- 32: caméra visible 360°
- 34: caméra optronique rotative et/ou pivotante, haute-définition avec zoom
- 40: contrôleur d'arme de tourelle
- 50: vue augmentée
- 52: objet(s) virtuel(s)
- 54: point de regard
- 56: objet(s) graphique(s)
- 58: cible(s) potentielle(s)
- 60: menu

## Revendications

1. Un système de contrôle (2) de fonctions de tourelle de véhicule terrestre de combat (4), ledit système de contrôle (2) comprenant :
- une pluralité de capteurs de saisie d'image (30) configurés pour enregistrer des séquences d'images présentant une vue au moins partielle de l'environnement 360° du véhicule terrestre de combat (4) ;
- au moins un casque (6) de réalité virtuelle, augmentée ou mixte adapté pour être porté par un opérateur (8), ledit casque (6) étant configuré pour présenter ladite vue au moins partielle de l'environnement du véhicule terrestre de combat (4) sur un affichage, ledit casque (6) comportant un capteur de direction (12) adapté pour suivre l'orientation dudit casque (6) imprimée lors d'un mouvement de tête de l'opérateur (8) ainsi que des moyens de suivi oculaire (14) adaptés pour suivre des mouvements oculaires dudit opérateur (8) ;
- une unité de contrôle (10), comprenant au moins une unité de calcul (16) et adaptée pour recevoir en entrée et traiter :
∘ des images fournies par les capteurs de saisie d'image (30) ;
∘ des données de position et d'orientation de casque (6) fournies par ledit capteur de direction (12) ;
∘ des données de position oculaires fournies par les moyens de suivi oculaire (14) ;
l'unité de contrôle (10) étant adaptée pour calculer une vue augmentée (50) au moins sur base desdites images et des données de position et d'orientation de casque (6), ladite vue augmentée (50) étant affichée pour l'opérateur (8) par l'intermédiaire dudit casque (6) ;
ladite unité de contrôle (10) étant en outre adaptée pour déterminer des paramètres d'une cible sélectionnée par l'opérateur (8) au moins sur base des données oculaires, ladite unité de contrôle (10) étant configurée pour calculer au moins un paramètre de tir et ladite unité de contrôle (10) étant adaptée pour transmette l'au moins un paramètre de tir à un contrôleur d'arme de tourelle (40) ;
ledit système de contrôle (2) comportant au moins un détecteur de demande de tir (20) configuré pour fournir un signal de demande de tir par l'opérateur (8) ; **caractérisé en ce que** l'au moins un casque (6) de réalité virtuelle comprend au moins un capteur additionnel de saisie d'images pour enregistrer des séquences d'images de l'environnement à l'intérieur du véhicule terrestre de combat (4), ledit système de contrôle (2) étant adapté pour recevoir des données associées auxdites images et de les afficher dans la vue augmentée (50) sur demande d'un opérateur (8).

2. Le système de contrôle (2) selon la revendication 1, **caractérisé en ce que** ledit détecteur de demande de tir (20) comprend au moins un joystick ou une manette libre configuré(e) en tant que capteur tactile.

3. Le système de contrôle (2) selon la revendication 1 ou 2, **caractérisé en ce que** ledit détecteur de demande de tir (20) comprend au moins un module de reconnaissance vocale (24) adapté pour fournir le signal de demande de tir.

4. Le système de contrôle (2) selon l'une quelconque des revendications précédentes, **caractérisé en ce que** des coordonnées d'un point du regard d'un opérateur (8) dans la ou chaque vue augmentée (50) sont déterminées sur base des moyens de suivi oculaire (14) et **en ce que** le système de contrôle (2) est configuré de telle sorte qu'un objet virtuel (52) associé audit point est intégré dans ladite vue (50) et est positionné selon lesdites coordonnées.

5. Le système de contrôle (2) selon l'une quelconque des revendications précédentes, comprenant des moyens de détermination des paramètres d'au moins une cible potentielle (58) sur base des images fournies par les capteurs de saisie d'images (30), le système de contrôle (2) étant configuré pour faire coïncider dans la ou chaque vue augmentée (50) un objet graphique (56) associé à la ou chaque cible potentielle (58) avec les coordonnées de la ou chaque cible potentielle (58).

6. Le système de contrôle (2) selon la revendication 5, **caractérisé en ce que** la cible sélectionnée par un opérateur (8) est identifiée ou validée lorsque l'objet graphique (56) associé respectivement à une cible potentielle (58) coïncide avec l'objet virtuel (52) associé au point de regard (54) de l'opérateur (8), les paramètres de la cible sélectionnée étant déterminés sur base des paramètres de la cible potentielle (58) identifiée.

7. Le système de contrôle (2) selon la revendications 6, **caractérisé en ce que** les paramètres de la cible sélectionnée sont déterminés sur base des coordonnées du point du regard de l'opérateur (8), par temporisation, c'est-à-dire lorsque le point regard dudit opérateur (8) devient immobile pendant une durée prédéterminée.

8. Le système de contrôle (2) selon l'une quelconque des revendications précédentes, **caractérisé en ce que** la ou chaque vue augmentée (50) est calculée sur base d'un traitement tel qu'une fusion d'images fournies par les capteurs de saisie d'images (30) et/ou par le capteur additionnel de capture d'images, et d'au moins un paramètre de contrôle de la configuration de ladite vue augmentée (50), de préférence l'au moins un paramètre comportant des coordonnées du centre de ladite vue et/ou la largeur du champ de ladite vue.

9. Le système de contrôle (2) selon l'une quelconque des revendications précédentes, **caractérisé en ce que** la ou chaque vue augmentée (50) est une vue sélectionnée au moins dans une liste de vues constituée d'une vue panoramique extérieure de l'environnement du véhicule terrestre de combat (4) de jour ou infrarouge, d'une portion de ladite vue panoramique, d'une région correspondant à un zoom ou agrandissement de la portion de ladite vue panoramique, d'une vue partielle de l'environnement à l'intérieur du véhicule terrestre de combat (4) et de toute combinaison de ces dernières.

10. Le système de contrôle (2) selon la revendication 9, **caractérisé en ce que** la ou chaque vue augmentée (50) est sélectionnée dans la liste de vues sur base d'au moins un paramètre de contrôle de la configuration de la vue augmentée (50), de préférence ladite vue (50) comportant un objet virtuel (52) de sélection dudit paramètre, de préférence un menu (60) intégré dans la vue augmentée (50).

11. Le système de contrôle (2) selon la revendication 10 en combinaison avec la revendication 6, **caractérisé en ce que** l'au moins paramètre de contrôle de la configuration de la vue augmentée (50) est déterminé sur base des coordonnées d'un point du regard d'un opérateur (8) dans la vue augmentée (50).

12. Le système de contrôle (2) selon l'une quelconque des revendications précédentes, **caractérisé en ce que** le paramètre de tir comprend au moins l'un des éléments suivant :
- une donnée correspondant à l'azimut et une donnée correspondant à l'élévation dudit canon de la tourelle ;
- des données correspondant aux coordonnées GPS de la cible sélectionnée.

13. Le système de contrôle (2) selon l'une quelconque des revendications précédentes, **caractérisé en ce que** les capteurs de saisie d'image (30) comportent au moins une caméra visible 360° (32) et/ou au moins une caméra optronique rotative et/ou pivotante, haute définition avec zoom (34).

14. Le système de contrôle (2) selon l'une quelconque des revendications précédentes, **caractérisé en ce que** la vue au moins partielle de l'environnement du véhicule terrestre de combat (4) correspond à la vue dégagée qu'aurait un opérateur (8) sans l'entrave d'au moins une portion de paroi de la caisse et/ou de la tourelle du véhicule (4) à partir d'une position liée à la caisse ou à la tourelle, ladite position étant de préférence à l'intérieur de la caisse.

15. Un véhicule terrestre de combat (4) comportant:
- un système de contrôle (2) selon l'une quelconque des revendications 1 à 14 ;
- une caisse automobile blindée et une tourelle motorisée pouvant l'une et/ou l'autre supporter les capteurs de saisie d'image (30) ;
- un canon et/ou un lance-missile disposé(s) sur ladite tourelle ;
- un contrôleur d'arme de tourelle (40) disposée sur le véhicule terrestre de combat (4) configuré pour recevoir l'au moins un paramètre de tir à dudit système de contrôle (2).

## Patentansprüche

1. Ein System zur Steuerung (2) der Drehkranzfunktionen eines terrestrischen Kampffahrzeugs (4), wobei das besagte Steuerungssystem (2) Folgendes umfasst:
- eine Vielzahl von Bilderfassungssensoren (30), die dazu ausgelegt sind, Bildsequenzen aufzuzeichnen, die eine mindestens teilweise 360°-Ansicht der Umgebung des terrestrischen Kampffahrzeugs (4) darstellen;
- mindestens ein Headset (6) für eine erweiterte oder gemischte virtuelle Realität, das zum Tragen durch einen Bediener (8) geeignet ist, wobei das Headset (6) dazu ausgelegt ist, die besagte mindestens teilweise Ansicht der Umgebung des besagten terrestrischen Kampffahrzeugs (4) auf einer Anzeige darzustellen, wobei das besagte Headset (6) einen Richtungssensor (12), der zur Verfolgung der bei einer Kopfbewegung des Bedieners (8) übertragenen Ausrichtung des besagten Headsets (6) geeignet ist sowie Eye-Tracking-Mittel (14), die zur Verfolgung der Augenbewegungen des besagten Bedieners (8) geeignet sind, aufweist;
- eine Steuerungseinheit (10), die mindestens eine Recheneinheit (16) umfasst und geeignet ist, um die folgenden eingehenden Informationen zu empfangen und zu verarbeiten:
∘ von den Bilderfassungssensoren (30) bereitgestellte Bilder;
∘ vom besagten Richtungssensor (12) bereitgestellte Daten über die Position und Ausrichtung des Headsets (6);
∘ von den Eye-Tracking-Mitteln (14) bereitgestellte Daten über die Augenposition;
wobei die Steuerungseinheit (10) zur Berechnung einer erweiterten Ansicht (50) mindestens auf der Basis der besagten Bilder und der Positions- und Ausrichtungsdaten des Headsets (6) geeignet ist, wobei die besagte erweiterte Ansicht (50) für den Bediener (8) mittels des besagten Headsets (6) angezeigt wird;
wobei die besagte Steuerungseinheit (10) ferner zur Bestimmung der Parameter eines vom Bediener (8) ausgewählten Ziels mindestens auf der Basis der Augendaten geeignet ist, wobei die besagte Steuerungseinheit (10) dazu ausgelegt ist, mindestens einen Feuerparameter zu berechnen und die besagte Steuerungseinheit (10) zur Übertragung des mindestens einen Feuerparameters an einen Drehkranz-Waffencontroller (40) geeignet ist;
wobei das besagte Steuerungssystem (2) mindestens einen Feueranforderungsdetektor (20) aufweist, der dazu ausgelegt ist, ein Signal zur Feueranforderung durch den Bediener (8) bereitzustellen;
**dadurch gekennzeichnet, dass** das mindestens eine Virtual-Reality-Headset (6) mindestens einen zusätzlichen Bilderfassungssensor zur Aufzeichnung der Bildsequenzen der Umgebung im Inneren des terrestrischen Kampffahrzeugs (4) umfasst, wobei das besagte Steuerungssystem (2) zum Empfang der den besagten Bildern zugeordneten Daten und ihrer Anzeige in der erweiterten Ansicht (50) auf Anforderung eines Bedieners (8) geeignet ist.

2. Das Steuerungssystem (2) nach Anspruch 1, **dadurch gekennzeichnet, dass** der besagte Feueranforderungsdetektor (20) mindestens einen Joystick oder einen freien Steuerhebel umfasst, der als berührungsempfindlicher Sensor ausgelegt ist.

3. Das Steuerungssystem (2) nach Anspruch 1 oder 2, **dadurch gekennzeichnet, dass** der besagte Feueranforderungsdetektor (20) mindestens ein Stimmerkennungsmodul (24) umfasst, das zur Bereitstellung des Feueranforderungssignals geeignet ist.

4. Das Steuerungssystem (2) nach irgendeinem der vorangehenden Ansprüche, **dadurch gekennzeichnet, dass** Koordinaten eines Blickpunkts eines Bedieners (8) in der oder jeder erweiterten Ansicht (50) auf Basis der Eye-Tracking-Mittel (14) bestimmt werden und dass das Steuerungssystem (2) derart ausgelegt ist, dass ein dem Punkt zugeordnetes virtuelles Objekt (52) in die Ansicht (50) integriert und gemäß den besagten Koordinaten positioniert wird.

5. Das Steuerungssystem (2) nach irgendeinem der vorangehenden Ansprüche, umfassend Mittel zur Bestimmung der Parameter mindestens eines potentiellen Ziels (58) auf der Basis der von den Bilderfassungssensoren (30) bereitgestellten Bilder, wobei das Steuerungssystem (2) dazu ausgelegt ist, in der oder jeder erweiterten Ansicht (50) ein grafisches Objekt (56), das dem oder jedem potentiellen Ziel (58) zugeordnet ist, mit den Koordinaten des oder jedes potentiellen Ziels (58) in Übereinstimmung zu bringen.

6. Das Steuerungssystem (2) nach Anspruch 5, **dadurch gekennzeichnet, dass** das von einem Bediener (8) ausgewählte Ziel identifiziert oder bestätigt wird, wenn das grafische Objekt (56), das jeweils einem potentiellen Ziel (58) zugeordnet ist, mit dem virtuellen Objekt (52) übereinstimmt, das dem Blickpunkt (54) des Bedieners (8) zugeordnet ist, wobei die Parameter des ausgewählten Ziels auf der Basis der Parameter des identifizierten potentiellen Ziels (58) bestimmt werden.

7. Das Steuerungssystem (2) nach Anspruch 6, **dadurch gekennzeichnet, dass** die ausgewählten Parameter des Ziels auf der Basis der Koordinaten des Blickpunkts des Bedieners (8) durch Verzögerung, d. h. wenn der Blickpunkt des besagten Bedieners (8) während einer vorher festgelegten Dauer unbewegt wird, bestimmt werden.

8. Das Steuerungssystem (2) nach irgendeinem der vorangehenden Ansprüche, **dadurch gekennzeichnet, dass** die oder jede erweiterte Ansicht (50) auf der Basis einer Verarbeitung wie eine Verschmelzung von Bildern, die von den Bilderfassungssensoren (30) und/oder von dem zusätzlichen Bilderfassungssensor bereitgestellt werden, und mindestens eines Steuerparameters der Konfiguration der erweiterten Ansicht (50), vorzugsweise mindestens eines Parameters, der Koordinaten des Zentrums der besagten Ansicht und/oder der Breite des Feldes der besagten Ansicht aufweist, berechnet wird.

9. Das Steuerungssystem (2) nach irgendeinem der vorangehenden Ansprüche, **dadurch gekennzeichnet, dass** die oder jede erweiterte Ansicht (50) eine Ansicht ist, die mindestens aus einer Liste von Ansichten ausgewählt ist, die aus einer äußeren Tages- oder Infrarot-Panoramaansicht der Umgebung des terrestrischen Kampffahrzeugs (4), einem Abschnitt der Panoramaansicht, einer Region, die einem Zoom oder Vergrößerung des Abschnitts der besagten Panoramaansicht, einer Teilansicht der Umgebung im Inneren des terrestrischen Kampffahrzeugs (4) oder allen Kombinationen derselben entspricht.

10. Das Steuerungssystem (2) nach Anspruch 9, **dadurch gekennzeichnet, dass** die oder jede erweiterte Ansicht (50) aus der Liste von Ansichten auf der Basis von mindestens einem Parameter zur Steuerung der Konfiguration der erweiterten Ansicht (50) ausgewählt ist, wobei die besagte Ansicht (50) vorzugsweise ein virtuelles Objekt (52) zur Auswahl des besagten Parameters, vorzugsweise ein in die erweiterte Ansicht (50) integriertes Menü (60), aufweist.

11. Das Steuerungssystem (2) nach Anspruch 10 in Kombination mit Anspruch 6, **dadurch gekennzeichnet, dass** der mindestens eine Parameter zur Steuerung der Konfiguration der erweiterten Ansicht (50) auf der Basis der Koordinaten eines Blickpunkts eines Bedieners (8) in der erweiterten Ansicht (50) bestimmt wird.

12. Das Steuerungssystem (2) nach irgendeinem der vorangehenden Ansprüche, **dadurch gekennzeichnet, dass** der Feuerparameter mindestens eins der folgenden Elemente umfasst:
- eine Angabe, die dem Azimut entspricht und eine Angabe, die der Elevation des besagten Laufs des Drehkranzes entspricht;
- Daten, die den GPS-Koordinaten des ausgewählten Ziels entsprechen.

13. Das Steuerungssystem (2) nach irgendeinem der vorangehenden Ansprüche, **dadurch gekennzeichnet, dass** die Bilderfassungssensoren (30) mindestens eine 360°-Rundumsichtkamera (32) und/oder mindestens eine optronische rotatorische und/oder schwenkende HD-Kamera mit Zoom (34) aufweisen.

14. Das Steuerungssystem (2) nach irgendeinem der vorangehenden Ansprüche, **dadurch gekennzeichnet, dass** die mindestens Teilansicht der Umgebung des terrestrischen Kampffahrzeugs (4) der freien Ansicht entspricht, die ein Bediener (8) ohne Behinderung von mindestens einem Abschnitt der Karosserie und/oder des Drehkranzes des Fahrzeugs (4) ausgehend von einer Position, die mit der Karosserie oder dem Drehkranz verbunden ist, haben würde wobei die besagte Position vorzugsweise im Inneren der Karosserie ist.

15. Ein terrestrisches Kampffahrzeug (4), das aufweist:
- ein Steuerungssystem (2) nach irgendeinem der Ansprüche 1 bis 14;
- einen gepanzerten Wagenkasten und einen motorisierten Drehkranz, von denen der eine und/oder der andere die Bilderfassungssensoren (30) tragen kann;
- einen auf dem besagten Drehkranz angeordneten Lauf und/oder einen Raketenwerfer;
- eine auf dem terrestrischen Kampffahrzeug (4) angeordnete Drehkranz-Waffensteuerung (40), die dazu ausgelegt ist, mindestens einen Feuerparameter für das besagte Steuerungssystem (2) zu empfangen.

## Claims

1. A system for controlling (2) turret functions of a land-based combat vehicle (4), said control system (2) comprising:
- a plurality of image detection sensors (30) configured to record sequences of images having an at least partial view of a 360° environment of the land-based combat vehicle (4);
- at least one virtual, augmented or mixed reality headset (6) suitable for being worn by an operator (8), said headset (6) being configured to present said at least partial view of the environment of the land-based combat vehicle (4) on a display, said headset (6) including a direction sensor (12) suitable for tracking the orientation of said headset (6) imparted during a movement of the head of said operator (8) as well as eye tracking means (14) suitable for tracking eye movements of said operator (8);
- a control unit (10), comprising at least one computing unit (16) and suitable for receiving as input and processing:
∘ images supplied by the image detection sensors (30);
∘ headset (6) position and orientation data supplied by said direction sensor (12);
∘ eye position data supplied by the eye tracking means (14);
the control unit (10) being suitable for computing an augmented view (50) at least based on said images and headset (6) position and orientation data, said augmented view (50) being displayed for the operator (8) by means of said headset (6);
said control unit (10) further being suitable for determining parameters of a target selected by the operator (8) at least based on eye data, said control unit (10) being configured to compute at least one firing parameter and said control unit (10) being suitable for transmitting the at least one firing parameter to a turret weapon controller (40);
said control system (2) including at least one firing request detector (20) configured to supply a firing request signal by the operator (8); **characterized in that** the at least one virtual reality headset (6) comprises at least one additional image detection sensor for recording sequences of images of the environment inside the land-based combat vehicle (4), said control system (2) being suitable for receiving data associated with said images and displaying it in the augmented view (50) upon request by the operator (8).

2. The control system (2) according to claim 1, **characterized in that** said firing request detector (20) comprises at least one joystick or free hand lever configured as touch-sensitive sensor.

3. The control system (2) according to claim 1 or 2, **characterized in that** said firing request detector (20) comprises at least one voice recognition module (24) suitable for supplying the firing request signal.

4. The control system (2) according to any one of the preceding claims, **characterized in that** coordinates of a point of gaze of the operator (8) in the augmented view (50) are determined based on the eye tracking means (14) and **in that** the control system (2) is configured such that a virtual object (52) associated with said point is integrated into said augmented view (50) and is positioned according to said coordinates.

5. The control system (2) according to any one of the preceding claims, comprising means for determining parameters of at least one potential target (58) based on the images supplied by the image detection sensors (30), the control system (2) being configured to cause a graphic object (56) associated with the or each potential target (58) to coincide, in the augmented view (50), with coordinates of the or each potential target (58).

6. The control system (2) according to claim 5 combined with claim 4, **characterized in that** the target selected by the operator (8) is identified or validated when the graphic object (56) respectively associated with the potential target (58) coincides with the virtual object (52) associated with the gaze point (54) of the operator (8), the parameters of the selected target being determined based on the parameters of the identified potential target (58).

7. The control system (2) according to claim 6, **characterized in that** the parameters of the selected target are determined based on coordinates of the gaze point of the operator (8) by time delay, that is to say, when the gaze point of said operator (8) becomes immobile during a predetermined duration.

8. The control system (2) according to any one of the preceding claims, **characterized in that** the or any augmented view (50) is calculated on the basis of a processing such as a fusion of images supplied by the image detection sensors (30) and/or by the additional image capture sensor, and at least one configuration control parameter of said augmented view (50), preferably the at least one parameter including coordinates of the center of said view and/or the filed width of said view.

9. The control system (2) according to any one of the preceding claims, **characterized in that** the augmented view (50) is a view selected at least in a list of views made up of a daytime or infrared exterior panoramic view of the environment of the land-based combat vehicle (4), a portion of said panoramic view, a region corresponding to a zoom or enlargement of the portion of said panoramic view, a partial view of the environment inside the land-based combat vehicle (4) and any combination thereof.

10. The control system (2) according to claim 9, **characterized in that** the augmented view (50) is selected from the list of views based on at least one parameter for controlling the configuration of the augmented view (50), preferably the view (50) including a virtual object (52) for selecting said parameter, preferably a menu (60) integrated into the augmented view (50).

11. The control system (2) according to claim 10 combined with claim 6, **characterized in that** the at least one parameter for controlling the configuration of the augmented view (50) is determined based on coordinates of the view of the of the operator (8) in the augmented view (50).

12. The control system (2) according to any one of the preceding claims, **characterized in that** the firing parameter comprises at least one of the following elements:
- a datum corresponding to an azimuth and a datum corresponding to an elevation of a canon of the turret;
- data corresponding to GPS coordinates of the selected target.

13. The control system (2) according to any one of the preceding claims, **characterized in that** the image detection sensors (30) include at least one camera with 360° visibility (32) and/or at least one rotating and/or pivoting optronic camera, high-definition with zoom (34).

14. The control system (2) according to any one of the preceding claims, **characterized in that** the at least partial view of the environment of the land-based combat vehicle (4) corresponds to the clear view that the operator (8) would have without hindrance from at least one wall portion of a body and/or of a turret of the vehicle (4) from a position connected to the body and/or to the turret.

15. A land-based combat vehicle (4) including:
- a control system (2) according to any one of claims 1 to 14;
- an armored automobile body and a motorized turret both able to bear the image detection sensors (30);
- a cannon and/or a missile launcher positioned on said turret;
- the turret weapon controller (40) positioned on the land-based combat vehicle (4) configured to receive the at least one firing parameter from said control system (2).
